# EUROPÄISCHE PATENTANMELDUNG

(11) **EP 2 955 052 A1**
(43) Veröffentlichungstag der Anmeldung: **16.12.2015**
(21) Anmeldenummer: 15170111.7
(22) Anmeldetag: 01.06.2015
(51) Int. Cl.: B60L 5/19, B60L 5/08, B60L 5/12, B60L 5/36

(54) **NICHT SCHIENENGEBUNDENES FAHRZEUG**

(30) Priorität: 10.06.2014 DE 102014211031
(71) Anmelder: Siemens Aktiengesellschaft, 80333 München (DE)
(72) Erfinder: Bühs, Florian, 10777 Berlin (DE); Francke, Jürgen, 12524 Berlin (DE); Gerstenberg, Frank, 10409 Berlin (DE); Keil, Göran, 12557 Berlin (DE); Tolksdorf, Andre, 12459 Berlin (DE); Voss, Frank, 12623 Berlin (DE)

(57) **Zusammenfassung**

Die Erfindung betrifft ein nicht schienengebundenes, elektrisch getriebenes Fahrzeug (1). Es umfasst einen eine Fahrzeugbreite (B1) aufweisenden Fahrzeugaufbau (10) und einen Stromabnehmer (20) zur Einspeisung von Traktionsenergie aus einer zweipoligen Oberleitung. Der Stromabnehmer (20) weist zwei Tragarme (21), ein gelenkig mit oberleitungsseitigen Enden (22) der Tragarme (21) verbundenes und quer zu einer Fahrzeuglängsachse (L) liegendes Scheitelrohr (24) und zwei um eine Scheitelrohrachse (S) drehbar gelagerte Wippen (25) mit Schleifleisten (26) auf. Dabei sind die Tragarme (21) an ihren fahrzeugseitigen Enden (23) derart am Fahrzeugaufbau (10) angelenkt, dass die Wippen (25) zwischen einer abgesenkten Ruheposition und einer angehobenen Kontaktposition höhenverstellbar und zwischen zwei seitlichen Auslenkpositionen querverstellbar sind. Erfindungsgemäß sind die Wippen (25) unabhängig voneinander querverstellbar, wobei wenigstens in der Ruheposition des Stromabnehmers (20) eine Stromabnehmerbreite (B2') einstellbar ist, die geringer als die Fahrzeugbreite (B1) ist. Hierdurch kann das erfindungsgemäße Fahrzeug (1) auch für den Betrieb außerhalb elektrifizierter Fahrstrecken zugelassen werden.

## Beschreibung

Die Erfindung betrifft ein nicht schienengebundenes, elektrisch getriebenes Fahrzeug nach dem Oberbegriff des Patentanspruches 1.

Ein derartiges Fahrzeug ist aus der Offenlegungsschrift DE 10 2011 076 623 A1 bekannt. Es umfasst einen eine Fahrzeugbreite aufweisenden Fahrzeugaufbau und einen Stromabnehmer zur Einspeisung von Traktionsenergie aus einer zweipoligen Oberleitung. Der Stromabnehmer weist zwei Tragarme auf, deren oberleitungsseitige Enden gelenkig mit einem quer zu einer Fahrzeuglängsachse liegenden Scheitelrohr verbunden ist. Das Scheitelrohr trägt zwei um eine Scheitelrohrachse drehbar gelagerte Wippen mit Schleifleisten. Mit ihren fahrzeugseitigen Enden sind die Tragarme derart am Fahrzeugaufbau angelenkt, dass die Wippen zwischen einer abgesenkten Ruheposition und einer angehobenen Kontaktposition höhenverstellbar und zwischen zwei seitlichen Auslenkpositionen querverstellbar sind.

Aufgrund des vorgegebenen Sicherheitsabstandes zwischen den als Hin- und Rückleiter der Oberleitung ausgebildeten und im Wesentlichen parallel zueinander verlaufenden Fahrdrähten sowie der vorgegebenen Mindestlänge der Schleifleisten zur Ausbildung eines ausreichenden Arbeitsbereichs für den Kontakt zwischen Schleifleiste und Fahrdraht nimmt der bekannte Stromabnehmer eine Stromabnehmerbreite ein, die deutlich größer als die behördlich zugelassene Fahrzeugbreite des Fahrzeugaufbaues ist. Für die Fahrt auf einer elektrifizierten Fahrbahn, etwa auf dem rechten Fahrstreifen einer mit Oberleitung versehenen Bundesautobahn, kann hier eine Ausnahmegenehmigung greifen. Das bekannte Fahrzeug leidet unter dem Nachteil, dass es durch die übergroße Stromabnehmerbreite die für den gewöhnlichen Straßenverkehr zulässige Gesamtbreite überschreitet und daher dort nicht betrieben werden kann.

Im Bereich elektrischer Bahnen sind Schienenfahrzeuge mit Stromabnehmern bekannt, deren Breite verändert werden kann, um ihr Lichtraumprofil für Tunnelfahrten zu verkleinern oder um im grenzüberschreitenden Zugverkehr die Anforderungen an Wippenbreiten und Schleifleistenkrümmungen verschiedener europäischer Ländern erfüllen zu können.

So ist aus der Patentschrift DE 353196 A ein aus Bügel und Schere bestehender Stromabnehmer bekannt, dessen Breite quer zur Längsachse des Fahrzeugs einstellbar ist. In einer ersten Ausführungsform ist der Stromabnehmer um eine senkrechte Achse drehbar auf einem mit dem Fahrzeug fest verbundenen Rahmen aufgesetzt. Durch die Drehung, die durch eine von einem Luftdruckzylinder bewegte Zahnstange getrieben wird, kann der Stromabnehmer von seiner seitlich ausladenden Lage in eine dem Tunnelprofil genügende Lage verbracht werden. In einer zweiten Ausführungsform ist das Schleifstück des Stromabnehmers an beiden Seiten mittels Gelenke durch Kurvenstücke verlängert, wobei die freien Enden dieser Kurvenstücke mittels zweier Lenker mit den beiden oberen Streben der Schere über Kugelgelenke verbunden sind. In Normalstellung sind bilden die Kurvenstücke genaue Verlängerungen des mittleren Schleifstückes, so dass der Stromabnehmer in dieser Lage seine größte Breite besitzt. Bei niedriger Fahrdrahtlage im Tunnel werden die seitlichen Kurvenstücke durch das Niederdrücken der Schere nach innen gezogen. In einer dritten Ausführungsform sind die Enden der Kurvenstücke mit dem zugehörigen Lenker nicht durch Gelenke verbunden, sondern durch Ringe oder Schleifen, in welchen sie sich frei verschieben können.

Die Gebrauchsmusterschrift DE 93 04 251 U1 offenbart einen Stromabnehmer für ein insbesondere gleisgebundenes Fahrzeug mit einer Wippe, die ein feststehendes Schleifstück sowie zwei zu diesem und senkrecht zur Längsachse des Fahrzeugs verstellbare Schleifstück umfasst. Dabei sind die verstellbaren Schleifstücke zu dem feststehenden Schleifstück in Zugrichtung betrachtet überlappend angeordnet.

Die Offenlegungsschrift DE 199 14 566 A1 zeigt ein Stromabnehmersystem zur Kontaktierung mit einem Fahrdraht einer Oberleitung. Es umfasst ein auf einem elektrisch betriebenen Schienenfahrzeug montierte, in der Höhe verstellbare Haltevorrichtung für ein Wippengestell. Auf dem Wippengestell sind Bügel und Schleifleisten vorgesehen und über Stelleinheiten befestigt. Die getrennten und jeweils einer Fahrzeugseite zugeordneten Schleifleisten und Bügel sind unabhängig voneinander quer zur Fahrtrichtung verstellbar. Die Stelleinheiten werden beispielsweise mittels pneumatischer oder hydraulisch betätigbarer Zylinder realisiert.

Die Offenlegungsschrift DE 10 2011 013 267 A1 schlägt einen Stromabnehmer für elektrisch angetriebene Fahrzeuge vor, bei dem eine Stromabnehmerwippe wenigstens eine quer zur Fahrtrichtung angeordnete Schleifleiste aufweist. Die Schleifleiste weist wiederum ein feststehendes Schleifstück und zwei gegenüber diesem in entgegengesetzte Richtungen verlagerbare Schleifstücke auf, welche an quer zur Fahrtrichtung angeordneten Bügeln angeordnet sind. Die Schleifleiste und die Bügel besitzten an ihren Enden Auflaufhörner. Die Bügelauflaufhörner stehen in der eingefahrenen Position der Bügel seitlich nicht über das von der feststehenden Schleifleiste und den Schleifleistenauflaufhörnern begrenzte Lichtraumprofil vor.

Diese bekannten Stromabnehmer für schienengebundene Bahnfahrzeuge sind für die Kontaktierung einer einpoligen Oberleitung konzipiert, wobei die Wippe zur Höhenverstellung von einem pantografenartigen Scheren- oder Halbscherengestell getragen wird und eine definierte Seitenlage zum Fahrdraht aufweist. Sie sind auf ein nicht schienengebundenes Straßenfahrzeug mit einem Stromabnehmer, dessen zwei Wippen jeweils einen Fahrdraht der zweipoligen Oberleitung unter seitlichem Ausgleich von Fahrungenauigkeiten im Fahrstreifen kontaktieren, nicht übertragbar.

Der Erfindung liegt daher die Aufgabe zugrunde, ein gattungsgemäßes Fahrzeug bereitzustellen, welches auch für den Betrieb außerhalb elektrifizierter Fahrstrecken zugelassen werden kann.

Die Aufgabe wird gelöst durch ein Fahrzeug der eingangs genannten Art mit den im kennzeichnenden Teil des Patentanspruches 1 angegebenen Merkmalen. Demnach umfasst ein nicht schienengebundenes, elektrisch getriebenes Fahrzeug, beispielsweise ein Schwerlastfahrzeug für den Straßenverkehr, einen Fahrzeugaufbau mit eine vorgegebenen Fahrzeugbreite. Ferner umfasst es einen Stromabnehmer zur Einspeisung von Traktionsenergie aus einer zweipoligen Oberleitung. Der Stromabnehmer weist zwei Tragarme mit oberleitungsseitigen und fahrzeugseitigen Enden auf. Ferner weist er ein gelenkig mit den oberleitungsseitigen Enden der Tragarme verbundenes und quer zu einer Fahrzeuglängsachse liegendes Scheitelrohr auf. Außerdem weist der Stromabnehmer zwei um eine Scheitelrohrachse drehbar gelagerte Wippen mit Schleifleisten auf. Dabei sind die Tragarme an ihren fahrzeugseitige Enden derart am Fahrzeugaufbau angelenkt, dass die Wippen zwischen einer abgesenkten Ruheposition und einer angehobenen Kontaktposition höhenverstellbar und zwischen zwei seitlichen Auslenkpositionen querverstellbar sind. Erfindungsgemäß sind die Wippen unabhängig voneinander querverstellbar, wobei wenigstens in der Ruheposition des Stromabnehmers eine Stromabnehmerbreite einstellbar ist, die geringer als die Fahrzeugbreite ist. Hierdurch kann die Stromabnehmerbreite zwischen einer breiten Betriebsposition, in der die Tragarme parallel zueinander seitlich verschwenkt werden können, und einer schmalen Ruheposition, in der die Tragarme gegenseitig aufeinander zugeschwenkt werden, eingestellt werden. In der Ruheposition ragen die Wippen seitlich nicht über den Fahrzeugaufbau hinaus. Damit kann die Gesamtbreite des Fahrzeugs die für den Straßenverkehr außerhalb elektrifizierter Fahrstrecken zulässige Fahrzeugbreite einhalten, indem der Stromabnehmer in seine abgesenkte Ruheposition mit kleiner Stromabnehmerbreite gebracht wird. Die voneinander unabhängige Querverstellbarkeit der Tragarme kann durch eine entsprechende getrennte Ansteuerung der die Schwenkbewegung der Tragarme bewerkstelligenden Torquemotoren mit hohen Drehmomenten erreicht werden.

In einer vorteilhaften Ausführungsform des erfindungsgemäßen Fahrzeugs weist das Scheitelrohr zwei, jeweils eine der Wippen tragende Scheitelrohrabschnitte auf, die über ein Gelenk in Richtung der Scheitelrohrachse gegeneinander verschiebbar verbunden sind. Damit bleibt einerseits die mechanische Stabilität des Stromabnehmers mit den an ihren oberleitungsseitigen Enden über das Scheitelrohr verbundenen Tragarmen gewährleistet, andererseits erlaubt die Verbindung des ersten und zweiten Scheitelrohrabschnittes über das Gelenk einen translatorischen Bewegungsfreiheitsgrad der Scheitelrohrabschnitte. Schwenken die Tragarme aufeinander zu oder voneinander weg, werden die Teleskoparme mittels des Gelenks teleskopartig ineinander geschoben bzw. auseinander gezogen, wodurch die Wippen aufeinander zu- bzw. voneinander wegbewegt werden. Mit Vorteil kann das Gelenk einen weiteren rotatorischen Bewegungsfreiheitsgrad der Scheitelrohrabschnitte zulassen, so dass diese sich um die Scheitelrohrachse gegeneinander verdrehen lassen. Hierdurch können die Scheitelrohrabschnitte an der Drehbewegung der jeweils durch sie getragenen Wippe unabhängig von der jeweils anderen teilnehmen.

In einer bevorzugten Ausgestaltung des erfindungsgemäßen Fahrzeugs weist jede der Wippen wenigstens eine parallel zum Scheitelrohr liegende Schleifleiste auf, die einander fluchtend angeordnet sind und an ihren seitlichen Enden nach unten gebogene, innere und äußere Auflaufhörner aufweisen, wobei wenigstens eines der inneren Auflaufhörner nach vorne oder hinten gebogen ist. Die Auflaufhörner verhindern, dass ein Fahrdraht bei größeren seitlichen Auslenkungen der Tragarme oder bei seitlichem Abtrieb der Fahrdrähte durch eine Windlast nicht unter die Schleifleisten geraten, sondern über ein Auflaufhorn wieder in den Arbeitsbereich einer Schleifleiste zurückgeführt wird. Hierzu bilden die Auflaufhörner die seitlich nach unten gebogenen Enden der Schleifleisten, insbesondere bestimmt der Abstand der äußeren Auflaufhörner die Stromabnehmerbreite. Beim Einschwenken der Tragarme in die Ruheposition können die Wippen soweit aufeinander zubewegt werden, bis die sich fluchtenden Schleifleisten aneinanderstoßen. Damit die Stromabnehmerbreite in der Ruheposition verkleinert werden kann, ist zur Vermeidung des Aneinanderstoßens zweier innerer Auflaufhörner wenigstens eines nach vorne oder nach hinten gebogen, um Platz für das andere zu machen. Der Effekt kann verbessert werden, wenn das jeweils andere innere Auflaufhorn entgegengesetzt zum ersten nach hinten bzw. vorne gebogen ist.

Weitere Eigenschaften und Vorteile ergeben sich aus einem anhand der Zeichnungen näher beschriebenen Ausführungsbeispiels des erfindungsgemäßen Fahrzeugs, in deren
- FIG 1: das Fahrzeug in Draufsicht mit einem Stromabnehmer in Betriebsposition und
- FIG 2: das Fahrzeug aus FIG 1 mit einem Stromabnehmer in Ruheposition
schematisch veranschaulicht ist.

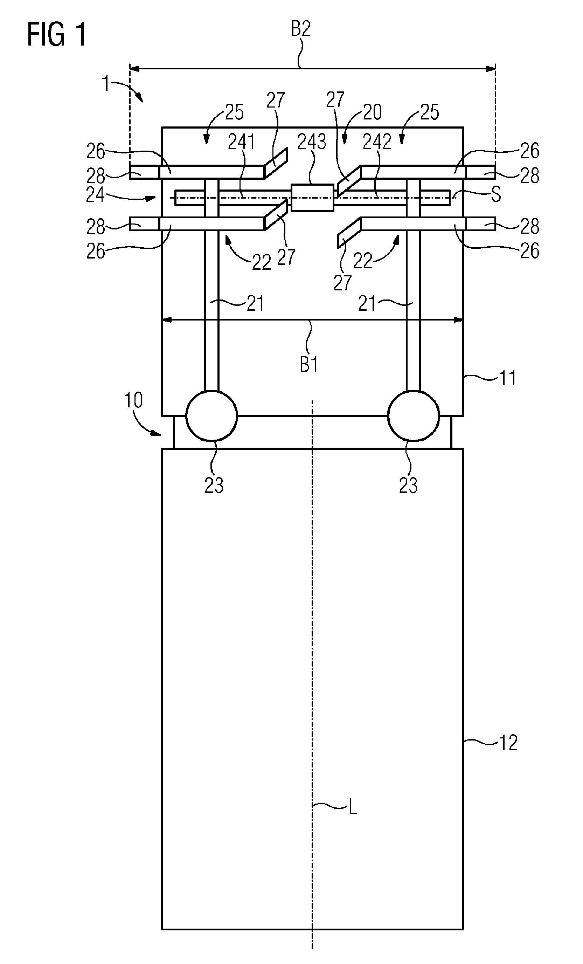

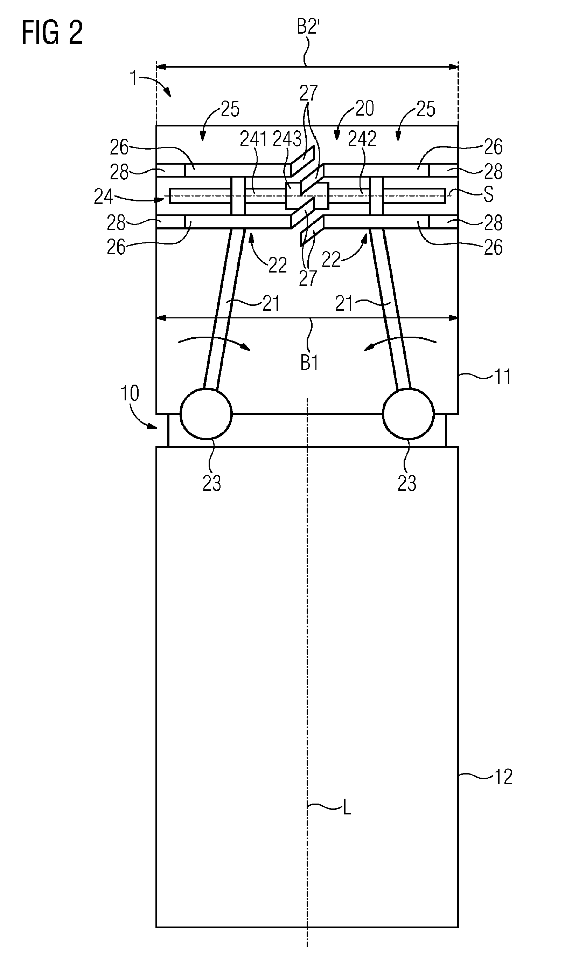

Ein nicht schienengebundenes, elektrisch getriebenes Fahrzeug 1 ist gemäß FIG 1 und FIG 2 beispielsweise als Schwerlastfahrzeug für den Straßenverkehr ausgeführt und umfasst einen nicht dargestellten elektrischen oder dieselelektrischen Traktionsantrieb. Das Fahrzeug 1 umfasst einen eine Fahrzeugbreite B1 bestimmenden Fahrzeugaufbau 10 mit einer Fahrerkabine 11 und einem dahinter angeordneten Ladeaufbau 12, welche sich auf einen nicht dargestellten Fahrzeugrahmen abstützen. Das Fahrzeug 1 umfasst ferner einen mit dem Fahrzeugrahmen verbundenen Stromabnehmer 20 zur Einspeisung von Traktionsenergie aus einer nicht dargestellten zweipoligen Oberleitung, die zwei als Hin- und Rückleiter ausgebildete Fahrdrähte aufweist. Die Fahrdrähte und diese über Hänger haltendenden Tragseile bilden ein Oberleitungskettenwerk, welches an von Masten über die Fahrbahn ragenden Auslegern gehalten und beispielsweise durch Radspanneinrichtungen abgespannt ist. Eine elektrifizierte Fahrstrecke, beispielsweise der rechte Fahrstreifen einer Autobahn, ist in elektrisch voneinander getrennte Speiseabschnitte unterteilt, die jeweils von einem Unterwerk mit elektrischer Energie versorgt werden.

Der Stromabnehmer 20 weist zwei Tragarme 21 auf, welche an ihren oberleitungsseitigen Enden 22 gelenkig mit einem quer zu einer Fahrzeuglängsachse L liegenden Scheitelrohr 24 verbunden sind. Die Fahrzeuglängsachse L weist bei Geradeausfahrt in Fahrtrichtung des Fahrzeug 1. Der Stromabnehmer 20 weist ferner zwei um eine Scheitelrohrachse S drehbar gelagerte Wippen 25 auf, die jeweils ein Paar von in Fahrtrichtung hintereinander angeordneten und parallel zur Scheitelrohrachse S verlaufende Schleifleisten 26 aufweisen. Mit ihren fahrzeugseitigen Enden 23 sind die Tragarme 21 am Fahrzeugaufbau 10 angelenkt. Jede dieser Anlenkungen ist doppelgelenkig ausgebildet und weist eine horizontale Kippachse und eine vertikale Schwenkachse auf. Jeder Tragarm 21 ist derart um seine horizontale Kippachse drehbar, dass sein oberleitungsseitiges Ende 22 zwischen einer abgesenkten Ruheposition, in welcher der Tragarm 21 etwa horizontal nach vorne über der Fahrerkabine 11 weist, und einer angehobenen Betriebsposition, in der die Schleifleisten 26 des jeweiligen Fahrdraht kontaktieren, höhenverstellbar ist. Die Höhenverstellung kann durch einen pneumatischen Zylinder oder Muskel angetrieben werden. Außerdem ist jeder Tragarm 21 derart um seine vertikale Schwenkachse drehbar, dass sein oberleitungsseitiges Ende 22 zwischen zwei seitlichen Auslenkpositionen querverstellbar ist. In der angehobenen Betriebsposition sind die Tragarme 21 gemäß FIG 1 parallel ausgerichtet und schwenken synchron, um eine Querverstellung der Wippen 25 auszuführen. Die Querverstellung erfolgt beispielsweise durch Torquemotoren, die von einer nicht dargestellten Regeleinrichtung angesteuert werden. Die Regeleinrichtung ermittelt die Stellgröße für die Querverstellung in Abhängigkeit von fortwährend erfassten Istwerten einer Sensoreinrichtung, die die seitliche Relativlage des Fahrzeugs 1 zur Oberleitung bestimmt. Hierdurch wird gewährleistet, dass die Schleifleisten 26 durch die Fahrdrähte stets in einem vorgegebenen Arbeitsbereich beschliffen werden, auch wenn das Fahrzeug 1 nicht exakt spur-treu gelenkt wird. Der Stromabnehmer 20 weist in der Betriebsposition eine Stromabnehmerbreite B2 auf, die größer als die Fahrzeugbreite B1 des Fahrzeugs 1 ist.

Bei Überhol- oder Ausweichmanövern, insbesondere aber bei Verlassen der elektrifizierten Fahrbahn, wird der Stromabnehmer 20 automatisch oder manuell in seine Ruheposition abgesenkt. Damit das Fahrzeug 1 auf nicht elektrifizierten Fahrstrecken seine zugelassene Fahrzeugbreite B1 nicht überschreitet, wird erfindungsgemäß vor dem oder beim Absenken des Stromabnehmers 20 in seine Ruheposition dessen Breite verringert. Hierzu sind die Wippen 25 unabhängig voneinander querverstellbar und werden derart in Richtung Fahrzeuglängsmitte aufeinander zubewegt, dass die Stromabnehmerbreite B2' in der abgesenkten Ruheposition geringer als die Fahrzeugbreite B1 ist. In der Ruheposition sind die Tragarme 21 gemäß FIG 2 aufeinander zugeschwenkt und schließen einen spitzen Winkel ein. Hierzu ist im dargestellten Ausführungsbeispiel das Scheitelrohr 24 in einen ersten Scheitelrohrabschnitt 241 und einen zweiten Scheitelrohrabschnitt 242 unterteilt, die über ein Gelenk 243 miteinander verbunden sind. Das Gelenk 243 gestattet einen linearen Bewegungsfreiheitsgrad, damit die Scheitelrohrabschnitte 241 und 242 teleskopartig ineinander geschoben und wieder auseinander gezogen werden können. Jede Schleifleiste 26 weist an ihrem der Fahrzeuglängsmitte zugewandten seitlichen Ende ein inneres Auflaufhorn 27 und an ihrem der Fahrzeuglängsmitte 25 abgewandten seitlichen Ende ein äußeres Auflaufhorn 28 auf. Die Auflaufhörner 27 und 28 sind schräg nach unten gebogen und an sich bekannt. Die Schleifleisten 26 benachbarter Wippen 25 sind einander fluchtend angeordnet. Um die Wippen 25 näher zur Fahrzeuglängsmitte bewegen zu können, sind die inneren Auflaufhörner 27 der einen Wippe 25 schräg nach vorn gebogen, während die inneren Auflaufhörner 27 der anderen Wippe 25 schräg nach hinten gebogen.

Indem die Stromabnehmerbreite B2' in der Ruheposition geringer als die Fahrzeugbreite B1 ist, kann auf der Fahrerkabine 11 ein durchgehendes Windleitelement verwendet werden, welches ein gebogenes Frontteil und zwei sich ohne Unterbrechung daran anschließende Seitenteile aufweist.

## Patentansprüche

1. Nicht schienengebundenes, elektrisch getriebenes Fahrzeug (1), umfassend einen eine Fahrzeugbreite (B1) aufweisenden Fahrzeugaufbau (10) und einen Stromabnehmer (20) zur Einspeisung von Traktionsenergie aus einer zweipoligen Oberleitung, wobei der Stromabnehmer (20) zwei Tragarme (21), ein gelenkig mit oberleitungsseitigen Enden (22) der Tragarme (21) verbundenes und quer zu einer Fahrzeuglängsachse (L) liegendes Scheitelrohr (24) und zwei um eine Scheitelrohrachse (S) drehbar gelagerte Wippen (25) mit Schleifleisten (26) aufweist, wobei die Tragarme (21) an ihren fahrzeugseitige Enden (23) derart am Fahrzeugaufbau (10) angelenkt sind, dass die Wippen (25) zwischen einer abgesenkten Ruheposition und einer angehobenen Kontaktposition höhenverstellbar und zwischen zwei seitlichen Auslenkpositionen querverstellbar sind, **dadurch gekennzeichnet, dass** die Wippen (25) unabhängig voneinander querverstellbar sind, wobei wenigstens in der Ruheposition des Stromabnehmers (20) eine Stromabnehmerbreite (B2') einstellbar ist, die geringer als die Fahrzeugbreite (B1) ist.

2. Fahrzeug (1) nach Anspruch 1, wobei das Scheitelrohr (24) zwei, jeweils eine der Wippen (25) tragende Scheitelrohrabschnitte (241, 242) aufweist, die über ein Gelenk (243) in Richtung der Scheitelrohrachse (S) gegeneinander verschiebbar verbunden sind.

3. Fahrzeug (1) nach Anspruch 1 oder 2, wobei jede der Wippen (25) wenigstens eine parallel zum Scheitelrohr (24) liegende Schleifleiste (26) aufweist, die einander fluchtend angeordnet sind und an ihren seitlichen Enden nach unten gebogene, innere und äußere Auflaufhörner (27, 28) aufweisen, wobei wenigstens eines der inneren Auflaufhörner (27) nach vorne oder hinten gebogen ist.
